# EUROPEAN PATENT SPECIFICATION

(11) **EP 2 409 953 B1**
(45) Date of publication and mention of the grant of the patent: **25.06.2014**
(21) Application number: 10841797.3
(22) Date of filing: 29.07.2010
(51) Int. Cl.: C01G 23/00, B01J 19/02, B01J 19/24, C01G 45/06, B01D 5/00, B01J 19/18

(54) **PROCESS FOR PRODUCING POTASSIUM FLUOTITANATE**
VERFAHREN ZUR HERSTELLUNG VON KALIUMFLUOTITANAT
PROCÉDÉ POUR PRODUIRE DU FLUOROTITANATE DE POTASSIUM

(30) Priority: 02.04.2010 CN 201010144172
(43) Date of publication of application: 25.01.2012
(73) Proprietor: Sun Xing Chemical & Metallurgical Materials (Shenzhen) Co. Ltd., Shenzhen, Guangdong 518000 (CN)
(72) Inventor: CHEN, Xuemin, Shenzhen Guangdong 518000 (CN); YE, Qingdong, Shenzhen Guangdong 518000 (CN); LI, Jianguo, Shenzhen Guangdong 518000 (CN); LIU, Chaowen, Shenzhen Guangdong 518000 (CN); YU, Yueming, Shenzhen Guangdong 518000 (CN)
(74) Representative: ProI European Patent Attorneys
(86) International application number: PCT/CN2010/075565
(87) International publication number: WO 2011/120274

(56) References cited:
- CN-A- 1 143 048
- CN-A- 101 518 725
- CN-A- 101 518 725
- GB-A- 206 809
- GB-A- 206 809
- US-A- 2 568 341
- US-A- 2 568 341
- US-A- 4 497 779
- US-A- 4 497 779
- WU, ZUNZHONG: 'Recovery of K2TiF6 from Ta/Nb Ore Extraction Raffinate' RARE METALS AND CEMENTED CARBIDES vol. 34, no. 1, March 2006, pages 46 - 48, XP008162678
- LIU, HAIXIA ET AL: 'New Process for the Production of Potassium fluotitanate' HENAN CHEMICAL INDUSTRY vol. 24, no. 12, 2007, pages 36 - 38, XP008162679

## Description

### 1. Field of the Invention

This invention pertains to the fine chemical technology, more specifically, this invention pertains to a preparation process of potassium fluorotitanate. A device for preparing potassium fluorotitanate is disclosed.

### 2. Description of the Related Art

Potassium fluorotitanate (K₂TiF₆) is one of the main raw materials for preparing Al-Ti-B alloy (the grain refiner of aluminum and aluminum alloy), so its yield and purity may directly affect the preparation of the Al-Ti-B alloy. For the preparation of potassium fluorotitanate, traditional techniques include the method involving fluorotitanic acid (H₂TiF₆), the method involving metatitanic acid (TiO(OH)₂), etc. In the traditional preparation process, a lot of heat is generated when the ilmenite is immersed, and the temperature of the reactor usually reaches 100∼200°C, so that a lot of hydrofluoric acid (HF) steam is generated and a lot of hydrofluoric acid is volatilized. During the reaction, lots of solid or liquid waste with fluorine is generated, which causes serious pollution to the environment. In the traditional preparation process of potassium fluorotitanate, other than that the pollution problem of hydrofluoric acid is difficult to solve, if the iron element of the ilmenite is discharged in liquid, the environment would also be contaminated severely, which is not good for the environmental protection.

GB 206,809 relates to a process for separating titanic substances from titaniferous material which comprises the following steps: firstly, digesting said material by aid of hydrofluoric acid to produce fluoride compounds of titanium, and thereafter withdrawing the resulting solution, adding thereto an alkali precipitant, withdrawing the resulting precipitate of potassium fluotitanate, dissolving it in water and treating the resulting solution so as to therein precipitate titanium hydroxide.

US 4,497,779 discloses a specific process for recovering fluorine from dilute hydrofluoric acid solutions, such as waste scrubber solution obtained in the treatment of phosphates.

US 2,568,341 relates to the production of sodium, potassium and ammonium fluotitanates and contemplates a process for the production of these fluotitanates from iron-bearing titaniferous raw materials.

CN 101518725 discloses a specific reaction kettle which comprises a vertical-type cylindrical kettle body with a top opening, a kettle lid is sealed on the upper opening part of the kettle body, a stirrer is arranged in the kettle body and penetrates out of the kettle lid to be connected with a power device in transmission, the outside of the rotary connecting part of the stirrer and the kettle lid is provided with an air-pressure sealer, the kettle body and the kettle lid are in a double-layer composite structure, the internal layer is made of Monel 400 and the external layer is made of 316 L steel.

### SUMMARY OF THE INVENTION

One of the purposes of this invention is providing a preparation process of potassium fluorotitanate (K₂TiF₆) which effectively restrains the generation of solid or liquid waste with fluorine in the whole reaction system and conquers the present technical defects by adding K₂CO₃ (potassium carbonate) solution in the reaction system to react with the solid or liquid waste with fluorine of the reaction products.

To achieve the above goal, this invention uses a preparation process which comprises the following steps:
A) bringing ilmenite powder into a reactor and adding refined HF and peroxide solution for full immersion, so that they can react sufficiently as follows to produce fluorotitanic acid (H₂TiF₆): 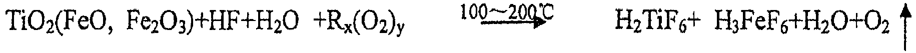 in the reaction system, the preferred concentration of HF solution is in the range of 10∼55% (if there is no specification in the description of this invention, the mentioned concentrations are all v/v concentrations), and
   in the molecular formula of the peroxide Rₓ(O₂)_{y}, x=1 or x=2, and y=1;
B) filtrating the resulting solution of step A and putting the filtrate to another reactor, then after the cooling down of fluorotitanic acid, adding KCl (potassium chloride) solution whose preferred concentration is in a range of 10∼50%, so that they can react sufficiently as follows to produce the precipitate of potassium fluorotitanate:

   H₂TiF₆+KCl →K₂TiF₆ ↓ + HCl

   and then filtrating the resulting solution using centrifuge dripping;
C) adding K₂CO₃ (potassium carbonate) solution whose preferred concentration is in a range of 10∼50% to the new reaction system formed by the filtrate of step B and controlling the pH value of the reaction system, so that they can react as follows:

   H₃FeF₆+K₂CO₃+HCl+H₂O →Fe(OH)₃ ↓ + KCl+KF+H₂O
then removing the iron elements as the flocculent precipitates of Fe(OH)₃ and recycling the KCl and KF (potassium fluoride) solution.

What is preferred is that said peroxide is inorganic peroxide or organic peroxide; said inorganic peroxide is alkali peroxide or alkaline earth peroxide, and said organic peroxide is carboxylic acid peroxide; the addition of the peroxide can be a little more than the demand of the reaction system so that the reaction can be sufficient.

What is further preferred is that said inorganic peroxide is H₂O₂ (hydrogen peroxide) or K₂O₂ (potassium peroxide) and said organic peroxide is CH₃CO₂OH (peracetic acid).

What is further preferred is that the pH value in said step C is controlled in a range of 2 ∼3, 3∼4, 4∼5, or 5∼7.

Furthermore, a device for preparing potassium fluorotitanate e.g., according to the present invention which makes sure that the reactions in the reaction system are going on well and can fully recycle the HF steam generated in the reaction process is disclosed.

To achieve the above goal, the following technical solution is employed:
A device for preparing potassium fluorotitanate comprising: a main body of the reactor, a sealing cover sealing the main body of the reactor, an outlet port, and a stirring rod set inside the main body of the reactor; said sealing cover includes an access for HF, an access for ilmenite powder, and a recycling condensation mechanism for HF steam.

What is further preferred is that said recycling condensation mechanism for HF steam is a condensation winding tube which comprises several winding parts, a HF recycling groove is disposed at the bottom of each winding part, several cooling water mechanisms which are connected with each other are set in said condensation winding tube, and an external spray type recycling device is connected to the end of the condensation winding tube.

What is further preferred is that said recycling condensation mechanism for HF steam is a condensation winding tube which comprises several winding parts and an air blower is set in each of the winding part.

What is further preferred is that a graphite layer is disposed in the lining of said main body of the reactor, and said stirring rod is made from polyvinyl chloride (PVC) or polypropylene (PP).

Compared with the prior art, the beneficial effects of this invention include:

In the reaction system of this invention, all the Fe²⁺ ions of the ilmenite powder are oxidized into Fe³⁺ ions by adding a moderate amount of peroxide, and then Fe³⁺ ions are removed as Fe(OH)₃ precipitates and are recycled later by adding a moderate amount of K₂CO₃ solution; the generated products like KCl after reaction can be further used as the raw materials of the reaction systems, so that "zero emission" can basically be realized in the reaction system. Further improvement in the reactor for preparing potassium fluorotitanate ensures that the massive HF steam generated when the ilmenite powder is immersed is recycled sufficiently, and that the ferrous (Fe²⁺) ions in the ilmenite first are oxidized into ferric (Fe³⁺) ions in the reaction process and finally are compressively recycled as the Fe(OH)₃ precipitates, which truly realizes turning waste into treasure, causes no pollution to the environment, and fully recycles the useful elements. So "zero emission" is basically realized in the whole reaction system.

### BRIEF DESCRIPTION OF THE DRAWINGS

In order to provide a further explanation of the present invention the following drawings are provided in which:

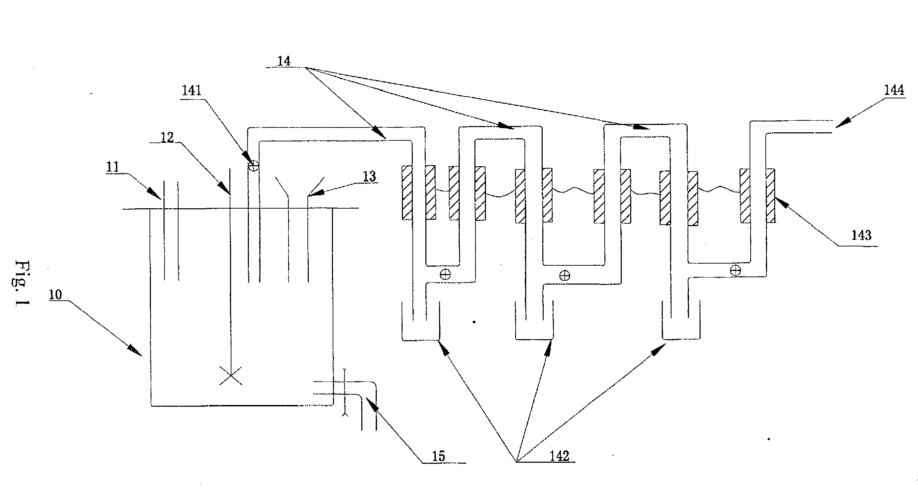

FIG. 1 is a structural schematic diagram of a reactor which can be useful for preparing potassium fluorotitanate according to the present invention.

### DETAILED DESCRIPTION OF PREFERRED EMBODIMENTS

Further description of this invention is made now through an embodiment of the invention and the accompanying drawings.

**Example 1:** As shown in FIG 1, a device for preparing potassium fluorotitanate comprising: a main body of the reactor 10, a sealing cover sealing the main body of the reactor, an outlet port 15, and a stirring rod 12 set inside the main body of the reactor; said sealing cover includes an access for HF 11, an access for ilmenite powder 13, and a recycling condensation mechanism for HF steam which is a condensation winding tube 14 comprising several winding parts, wherein an air blower 141 is set in each of the winding parts of the condensation winding tube; a HF recycling groove 142 is disposed at the bottom of each winding part, several cooling water mechanisms 143 which are connected with each other are set in said condensation winding tube, and an external spray type recycling device 144 is connected to the end of the condensation winding tube, which can directly condense and recycle the HF (hydrofluoric acid) (if there is HF still not condensed in the condensation process) and realize the "zero emission" of HF. A graphite layer is disposed in the lining of said main body of the reactor, and said stirring rod is made from polyvinyl chloride (PVC) or polypropylene (PP), which uses low cost materials to meet the demand for full immersion of the ilmenite powder in the reaction through ways like stirring.

The preparation process of potassium fluorotitanate (K₂TiF₆) comprises the following steps:
A. putting ilmenite powder weighing around one ton into a reactor and adding refined HF and H₂O₂ (hydrogen peroxide) solution for full immersion, so that they can react sufficiently as follows to produce fluorotitanic acid (H₂TiF₆): 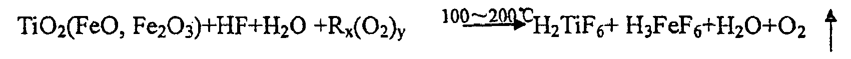 in the reaction system, the preferred concentration of HF solution is in the range of 5∼20%, and the addition amount is around two point five tons; the preferred concentration of H₂O₂ solution is in a range of 5∼30%, and more preferably, is in a range of 10∼20%, and the addition amount is around three tons; adding H₂O₂ solution with a concentration range of 10∼20% in the HF solution which can oxidize the ferrous (Fe²⁺) ions of FeO in the ilmenite powder into ferric (Fe³⁺) ions, so the ferrous ions of the system would not form FeTiF₆, so that the ion elements of the system as the flocculent precipitates of Fe(OH)₃ can be removed later;
B. filtrating the resulting solution of step A and putting the filtrate to another reactor after the ilmenite powder is fully immersed, then after the cooling down of fluorotitanic acid, adding KCl (potassium chloride) solution whose addition amount is around three tons with a concentration range of 30∼35% in the reaction system, so that they can react sufficiently as follows to produce the precipitates of potassium fluorotitanate (K₂TiF₆):

   H₂TiF₆+KCl→K₂TiF₆↓+HCl

   then filtrating the resulting solution using centrifuge dripping, recycling potassium fluorotitanate and transferring the filtrate to the third reactor;
C. adding K₂CO₃ (potassium carbonate) solution whose addition amount is around two tons with a concentration range of 30∼35% in the new reaction system formed by the filtrate of step B, and controlling the pH value of the reaction system to be in a range of 3∼4, so that they can react as follows:

   H₃FeF₆+K₂CO₃+HCl+H₂O →Fe(OH)₃ ↓ +KCl+KF+H₂O

   then compressing the iron elements as the flocculent precipitates of Fe(OH)₃ using the plate compressor and recycling them, and recycling the KCl and KF (potassium fluoride) solution for reuse.

**Example 2:** As shown in FIG 1, a device for preparing potassium fluorotitanate comprising: a main body of the reactor 10, a sealing cover sealing the main body of the reactor, an outlet port 15, and a stirring rod 12 set inside the main body of the reactor; said sealing cover includes an access for HF 11, an access for ilmenite powder 13, and a recycling condensation mechanism for HF steam which is a condensation winding tube 14 comprising several winding parts, wherein an air blower 141 is set in each of the winding parts of the condensation winding tube; a HF recycling groove 142 is disposed at the bottom of each winding part, several cooling water mechanisms 143 which are connected with each other are set in said condensation winding tube, and an external spray type recycling device 144 is connected to the end of the condensation winding tube, which can directly condense and recycle the HF (hydrofluoric acid) (if there is HF still not condensed in the condensation process) and realize the "zero emission" of HF. A graphite layer is disposed in the lining of said main body of the reactor, and said stirring rod is made from polyvinyl chloride (PVC) or polypropylene (PP), which uses low cost materials to meet the demand for full immersion of the ilmenite powder in the reaction through ways like stirring.

The preparation process of potassium fluorotitanate (K₂TiF₆) comprises the following steps:
A. putting ilmenite powder weighing around one ton into a reactor and adding refined HF (fluorotitanic acid) and CH₃CO₂OH (peracetic acid) solution for full immersion, so that they can react sufficiently as follows to produce fluorotitanic acid (H₂TiF₆): 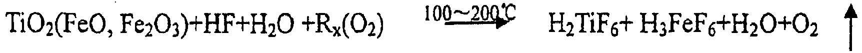 in the reaction system, the addition amount of HF solution is around two point five tons, and the preferred concentration of HF solution is in the range of 5∼20%; the preferred concentration of CH₃CO₂OH solution is in a range of 5 ∼30%, and more preferably, is in a range of 10∼20%; adding CH₃CO₂OH solution weighing around three tons with a concentration range of 10∼20% in the HF solution which can oxidize the ferrous (Fe²⁺) ions of FeO in the ilmenite powder into ferric (Fe³⁺) ions, so the ferrous ions of the system would not form FeTiF₆, so that the ion elements of the system as the flocculent precipitates of Fe(OH)₃ can be removed later;
B. filtrating the resulting solution of step A and putting the filtrate to another reactor after the ilmenite powder is fully immersed, then after the cooling down of fluorotitanic acid, adding KCl (potassium chloride) solution whose addition amount is around three tons with a concentration range of 15∼20% in the reaction system, so that they can react sufficiently as follows to produce the precipitates of potassium fluorotitanate (K₂TiF₆):

   H₂TiF₆+KCl →K₂TiF₆ ↓+HCl

   then filtrating the resulting solution using centrifuge dripping, recycling potassium fluorotitanate and transferring the filtrate to the third reactor;
C. adding K₂CO₃ (potassium carbonate) solution whose addition amount is around two tons with a concentration range of 30∼35% in the new reaction system formed by the filtrate of step B, and controlling the pH value of the reaction system to be in a range of 3∼4, so that they can react as follows:

   H₃FeF₆+K₂CO₃+HCl+H₂O →Fe(OH)₃ ↓+KCl+KF+H₂O

   then compressing the iron elements as the flocculent precipitates of Fe(OH)₃ using the plate compressor and recycling them for reuse, and recycling the KCl and KF (potassium fluoride) solution for reuse.

While further detailed descriptions of this invention have been given above in connection with the preferred embodiments, it should be understood that this invention is not limited to the disclosed embodiments.

## Claims

1. A preparation process of potassium fluorotitanate which comprises the following steps:
A) putting ilmenite powder in a reactor and adding refined HF and peroxide solution for full immersion, so that they can react sufficiently as follows to produce fluorotitanic acid: 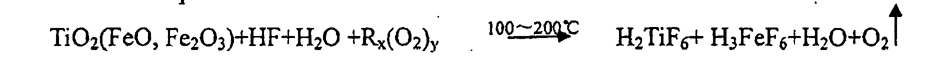
B) filtrating the resulting solution of step A and putting the filtrate to another reactor, then after the cooling down of fluorotitanic acid, adding KCl solution, so that they can react sufficiently as follows to produce the precipitate of potassium fluorotitanate:
H₂TiF₆+KCl →K₂TiF₆ ↓ +HCl
and then filtrating the resulting solution using centrifuge dripping;
C) adding K₂CO₃ solution to the new reaction system formed by the filtrate of step B and controlling the pH value of the reaction system, so that there is a chemical reaction as follows:
H₃FeF₆+K₂CO₃+HCl+H₂O →Fe(OH)₃ ↓ +KCl+KF+H₂O
then removing the iron elements as the flocculent precipitates of Fe(OH)₃ and recycling the KCl and KF solution.

2. The preparation process of potassium fuorotitanate of claim 1, wherein said peroxide is inorganic peroxide or organic peroxide.

3. The preparation process of potassium fluorotitanate of claim 2, wherein said inorganic peroxide is H₂O₂ or K₂O₂, and said organic peroxide is CH₃CO₂OH.

4. The preparation process of potassium fluorotitanate of any of claims 1 to 3, wherein the pH value in said step C is controlled in a range of 2∼3, 3∼4, 4∼5, or 5∼7.

## Patentansprüche

1. Herstellungsverfahren für Kalium-Fluoro-Titanat, welches folgende Schritte umfasst:
A) Eingabe von Ilmenitpulver in ein Reaktionsgefäß und Hinzugabe von verfeinertem HG und Peroxydlösung durch vollständiges Eintauchen, so dass sie zur Herstellung von Fluoro-Titaniumsäure, wie folgt, ausreichend miteinander reagieren können: 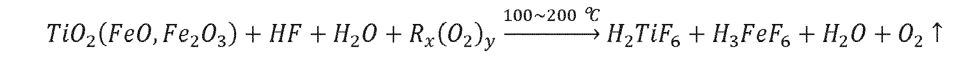
B) Filtrieren der aus Schritt A resultierenden Lösung und Eingabe der filtrierten Lösung in ein anderes Reagenzgefäß, danach Herunterkühlung der Fluoro-Titaniumsäure, Hinzugabve von KCl Lösung, so dass sie zur Herstellung des Kondensats von Kalium-Fluoro-Titanat, wie folgt, ausreichend reagieren können:
*H₂TiF₆* + *KCl* → *K₂TiF₆* ↓ +*HCl*
und dann Filtrieren der resultierenden Lösung durch Abtropfen unter Verwendung einer Zentrifuge;
C) Hinzugabe einer *K₂CO₃*Lösung zum neuen Reaktionssystem, welche aus der Filtrierung in Schritt B und der Steuerung des pH-Wertes des Reaktionssystems gebildet ist, so dass sich eine chemische Reaktion, wie folgt, ergibt:
*H₃FeF₆* + *K₂CO₃* + *HCl* + *H₂O* → *Fe*(*OH*)*₃* ↓ +*KCl* + *KF* + *H₂O*
danach Entfernung der Eisenelemente als Flockungskondensationsmittel von *Fe*(*OH*)*₃* und Recyceln der KCI- und KF-Lösungen.

2. Herstellungsverfahren für Kalium-Fluoro-Titanat nach Anspruch 1, wobei das Peroxyd anorganisches Peroxyd oder organisches Peroxyd ist.

3. Herstellungsverfahren für Kalium-Fluoro-Titanat nach Anspruch 2, wobei das anorganische Peroxyd H₂O₂ oder K₂O₂ und das organische Peroxyd CH₃CO₂OH sind.

4. Herstellungsverfahren für Kalium-Fluoro-Titanat nach einem der Ansprüche 1 bis 3, wobei der pH-Wert beim Verfahrensschritt C in einem Bereich von 2∼3, 3∼4, 4∼5 oder 5∼7 gehalten wird.

## Revendications

1. Procédé de préparation de fluorotitanate de potassium qui comprend les étapes suivantes :
A) transfert d'une poudre d'ilménite dans un réacteur et ajout d'une solution raffinée de HF et d'un peroxyde pour immersion complète, de façon à ce qu'elles puissent réagir suffisamment comme suit pour produire de l'acide fluorotitanique : 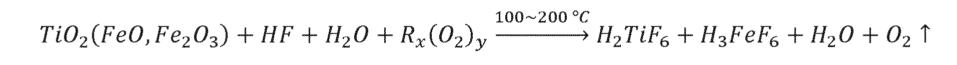
B) filtration de la solution résultante de l'étape A et transfert du filtrat dans un autre réacteur, ensuite, après refroidissement de l'acide fluorotitanique, ajout d'une solution de KCI, de façon à ce qu'ils puissent réagir suffisamment comme suit pour produire le précipité de fluorotitanate de potassium :
*H₂TiF₆* + *KCl → K₂TïF₆* ↓ +*HCl*
et ensuite filtration de la solution résultante en utilisant un égouttage centrifuge ;
C) ajout d'une solution de K₂CO₃ au nouveau système réactionnel formé par le filtrat de l'étape B et contrôle de la valeur de pH du système réactionnel, de façon à ce qu'il y ait une réaction chimique comme suit :
*H₃FeF₆* + *K₂CO₃* + *HCl* + *H₂O* → *Fe*(*OH*)*₃* ↓ +*KCl* + *KF* + *H₂O*
ensuite élimination des éléments fer comme les précipités floculant de Fe(OH)₃ et recyclage de la solution de KCI et KF.

2. Procédé de préparation de fluorotitanate de potassium selon la revendication 1, dans lequel ledit peroxyde est un peroxyde inorganique ou un peroxyde organique.

3. Procédé de préparation de fluorotitanate de potassium selon la revendication 2, dans lequel ledit peroxyde inorganique est H₂O₂ ou K₂O₂ et ledit peroxyde organique est CH₃CO₂OH.

4. Procédé de préparation de fluorotitanate de potassium selon l'une quelconque des revendications 1 à 3, dans lequel la valeur de pH à ladite étape C est contrôlée dans une plage de 2∼3, 3∼4, 4∼5 ou 5∼7.
